(19) Europäisches Patentamt / European Patent Office / Office européen des brevets

(11) **EP 3 314 739 B1**

(12) **FASCICULE DE BREVET EUROPEEN**

(45) Date de publication et mention de la délivrance du brevet:
**18.12.2019 Bulletin 2019/51**

(21) Numéro de dépôt: **16741663.5**

(22) Date de dépôt: **23.06.2016**

(51) Int Cl.:
*H02J 7/02* (2016.01)    *H02M 3/158* (2006.01)
*B60L 53/14* (2019.01)

(86) Numéro de dépôt international:
**PCT/FR2016/051551**

(87) Numéro de publication internationale:
**WO 2016/207562 (29.12.2016 Gazette 2016/52)**

(54) **PROCÉDÉ DE CHARGE D'UNE UNITÉ DE STOCKAGE D'ÉNERGIE ÉLECTRIQUE ET CONVERTISSEUR DE TENSION**

VERFAHREN ZUM LADEN EINER STROMSPEICHEREINHEIT UND SPANNUNGSWANDLER

METHOD FOR CHARGING AN ELECTRICAL ENERGY STORAGE UNIT AND VOLTAGE CONVERTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.06.2015 FR 1555801**

(43) Date de publication de la demande:
**02.05.2018 Bulletin 2018/18**

(73) Titulaire: **Valeo Siemens eAutomotive France SAS**
**95800 Cergy (FR)**

(72) Inventeurs:
• **BOUCHEZ, Boris**
  **95800 Cergy (FR)**
• **CONDAMIN, Bruno**
  **95300 Pontoise (FR)**
• **CHAUVENET, Pierre-Alexandre**
  **95800 Cergy (FR)**

(74) Mandataire: **Argyma**
**36, rue d'Alsace Lorraine**
**31000 Toulouse (FR)**

(56) Documents cités:
FR-A1- 2 990 310    FR-A1- 2 992 492
FR-A1- 3 013 166    US-A1- 2009 196 072

## Description

L'invention concerne un procédé de charge d'une unité de stockage d'énergie électrique, notamment embarquée dans un véhicule, à partir d'une borne de recharge continue. L'invention concerne aussi un convertisseur de tension continu/continu. En particulier, le convertisseur de tension est configuré pour adapter la tension entre une borne de recharge continue et une unité de stockage d'énergie électrique, notamment embarquée dans un véhicule.

Les véhicules à motorisation uniquement électrique ou à motorisation électrique en association avec un autre type de motorisation (véhicules hybrides) comprennent typiquement une batterie haute tension, par exemple ayant une tension de l'ordre de 400V, qui délivre une énergie électrique pour entraîner un moteur destiné à mettre en mouvement le véhicule. Dans certains véhicules, une telle batterie peut être rechargée à partir d'un réseau électrique extérieur au véhicule. Il est connu d'utiliser une borne de recharge conçue pour délivrer une énergie mise en forme pour la charge de la batterie, par exemple avec une puissance suffisante pour une charge rapide. On connait des bornes de recharge délivrant une tension alternative et des bornes de recharge délivrant une tension continue, appelée ci-après « bornes de recharge continue ». Typiquement, les bornes de recharge continue comprennent une unité qui régule la charge.

Les bornes de recharge continue sont généralement conçues pour charger à une puissance d'environ 50kw des batteries ayant une tension de charge maximale comprise entre 250 et 550V environ. Une batterie ayant une tension comprise dans cette gamme de tension peut être connectée directement à la borne de recharge, via éventuellement un filtre électronique. Cependant, la batterie du véhicule peut avoir une tension de charge maximale hors de la gamme acceptée par la borne de recharge. En effet, un constructeur peut prévoir une batterie avec une tension de charge maximale supérieure afin de limiter les courants dans les phases du moteur électrique, ce qui réduit entre autres la section des câbles électriques. Un convertisseur de tension continu-continu (ou convertisseur DCDC pour « DCDC converter » en anglais) peut alors être utilisé pour adapter la tension entre la borne de recharge continue et la batterie du véhicule. Cependant, le convertisseur peut créer des perturbations sur la borne de recharge continue dues aux commutations des interrupteurs du convertisseur DCDC. Le document US 2009/196072 A1 décrit un convertisseur DC/DC comprenant deux cellules fonctionnant en décalage de phaseavec un rapport cyclique constant.

Il est donc recherché un procédé de charge d'une unité de stockage d'énergie électrique, telle qu'une batterie d'un véhicule, à partir d'une borne de recharge continue dans lequel l'utilisation d'un convertisseur DCDC entre la borne de recharge continue et l'unité de stockage entraîne de faibles perturbations sur la borne de recharge, et dans lequel le rapport cyclique est modifié pour maintenir la tension au point de connexion dans la gamme de fonctionnement de la borne de recharge.

A cet effet, l'invention concerne un procédé de charge d'une unité de stockage d'énergie électrique, notamment embarquée dans un véhicule, à partir d'une borne de recharge continue en utilisant un convertisseur de tension continu/continu pour adapter la tension entre ladite borne de recharge continue et ladite unité de stockage d'énergie électrique, ledit convertisseur continu/continu comprenant au moins deux cellules entrelacées fonctionnant en décalage de phase, chaque cellule ayant des interrupteurs respectifs ;
ledit procédé comportant une commande par modulation de largeur d'impulsion des interrupteurs dudit convertisseur continu/continu avec un rapport cyclique pour adapter la tension entre ladite borne de recharge continue et l'unité de stockage d'énergie électrique, ledit rapport cyclique ayant une valeur donnée sensiblement constante sur plusieurs cycles d'entrelacement consécutifs, notamment sur toute la durée de la charge, lorsque la tension de l'unité de stockage d'énergie électrique est supérieure à un premier seuil et/ou inférieure à un deuxième seuil, lesdits seuils étant fonction d'une gamme de fonctionnement de la borne de recharge continue.

En particulier, le cycle d'entrelacement correspond au produit entre le nombre de cellules du convertisseur de tension continu/continu et la durée en temps du décalage de phase entre deux cellules successives. En particulier, l'unité de stockage d'énergie présente une tension de charge complète supérieure à la gamme de fonctionnement de la borne de recharge.

Le courant à un point de connexion du convertisseur de tension continu/continu avec la borne de recharge a des ondulations (« current ripples » en anglais) plus ou moins élevées en fonction du rapport cyclique du convertisseur de tension continu/continu. Les ondulations de courant interviennent à une fréquence qui est fonction du nombre de cellules et de la fréquence de découpage du convertisseur continu/continu. Ces ondulations de courant peuvent se propager dans des composants de la borne de recharge, tels que des inductances ou des capacités de la borne de recharge. Lorsque le rapport cyclique varie, les ondulations de courant varient ce qui modifie les perturbations dans la borne de recharge. En fonctionnant avec une valeur de rapport cyclique sensiblement constante, on s'assure que les perturbations restent constantes dans la borne de recharge ce qui facilite le respect des standards des bornes de recharge continue. En outre, cela simplifie aussi la régulation dans le procédé de charge car il n'y a pas de régulation de tension à réaliser, juste un rapport cyclique fixe à appliquer.

Selon un mode de réalisation, la valeur donnée $\alpha_v$ du rapport cyclique est égale au produit de l'inverse du nombre N de cellules du convertisseur de tension continu/continu par un entier naturel X, notamment inférieur à N. Ainsi, la valeur donnée $\alpha_v$ du rapport cyclique correspond à une des valeurs définies par la relation $\alpha_v = \dfrac{X}{N}$ où N est le nombre de cellules entrelacées et X est un entier naturel, notamment inférieur à N.

A ces valeurs de rapport cyclique, les ondulations de courant au point de connexion entre la borne de recharge et le convertisseur de tension continu/continu sont sensiblement atténuées, voire supprimées, ce qui permet de respecter les normes d'utilisation des bornes de recharge continue. Ainsi, on s'assure que les perturbations dans la borne de recharge continue qui sont dues aux ondulations de courant au point de connexion entre la borne de recharge continue et le convertisseur de tension continu/continu sont fortement atténuées, voire supprimées pendant la charge de l'unité de stockage d'énergie électrique. En particulier, les ondulations de courant sont réduites à un niveau compris entre 0 et 5%, voire entre 0 et 2,5%, voire même entre 0 et 1% en valeurs normalisées. En conséquence, la taille du filtre permettant de respecter ce que peut supporter la borne de recharge continue peut être minimisée car les ondulations sont faibles. Il s'avère même que si les perturbations sont suffisamment faibles, on peut se passer de l'utilisation d'un filtre. Cela permet un gain en volume et en coût du convertisseur continu/continu, particulièrement pour un convertisseur continu/continu dont les composants ont une puissance d'environ 50kW ou 100 kW, voire 150kw ou plus.

Selon un mode de réalisation, ladite valeur donnée du rapport cyclique est sensiblement égale à 50% lorsque le convertisseur de tension continu/continu comprend un nombre pair de cellules.

A une valeur cyclique de 50%, les ondulations de courant sont atténuées quel que soit le nombre de cellules du convertisseur continu/continu pourvu que le nombre est pair. Ainsi, le procédé peut être mis en oeuvre avec des convertisseurs continu/continu différents sans modifier une étape de celui-ci, ce qui permet de simplifier le procédé selon l'invention.

Au cours de la charge de l'unité de stockage d'énergie, la tension augmente à ses bornes ce qui amène également une augmentation de la tension au point de connexion entre la borne de recharge continue et le convertisseur de tension continu/continu. En ayant un rapport cyclique fixe sur plusieurs cycles d'entrelacement, voire sur toute la période de charge, il y a une relation linéaire entre la tension de l'unité de stockage d'énergie électrique et la tension à la borne de recharge continue, en particulier au point de connexion entre la borne de recharge continue et le convertisseur continu/continu. Ainsi, la régulation de la borne de recharge continue peut être faite sans prendre en compte le fait que l'unité de stockage d'énergie est hors, ou dans, la gamme de fonctionnement de la borne de recharge. Pour la borne de recharge tout se passe comme si celle-ci avait une unité de stockage électrique dont la tension est comprise dans sa gamme de fonctionnement. La borne de recharge continue voit le véhicule comme si celui-ci contenait une unité de stockage d'énergie, notamment une batterie, de tension habituelle mais avec une capacité $1/\alpha_v$ Il n'y a donc pas de modifications à faire au niveau de la borne pour l'adapter à l'unité de stockage. Les bornes déjà installées ne demandent donc aucune modification pour être compatibles avec l'unité de stockage même si celle-ci est hors de la gamme de fonctionnement de la borne de recharge continue. Seule la demande en courant transmise par le véhicule, doit être adaptée pour obtenir un rapport de tension adéquat.

En s'assurant que la tension de l'unité de stockage d'énergie électrique reste supérieure au premier seuil et/ou inférieure au deuxième seuil, on vérifie que maintenir le rapport cyclique constant n'entraîne pas une tension au point de connexion qui abimerait la borne de recharge continue.

Selon une variante de ce mode de réalisation, le rapport cyclique du convertisseur de tension continu/continu est modifié, lorsque la tension de l'unité de stockage d'énergie électrique est supérieure au deuxième seuil. En particulier, lorsque la tension de l'unité de stockage d'énergie a dépassé ledit deuxième seuil, la tension au point de connexion entre la borne de recharge continue et le convertisseur de tension continu/continu est maintenue inférieure ou égale à une tension maximale de la borne de recharge continue en faisant varier le rapport cyclique du convertisseur de tension continu/continu. Notamment, le rapport cyclique diminue de manière à diminuer la tension audit point de connexion.

Selon un mode de réalisation, le rapport cyclique du convertisseur de tension continu/continu est égal à 1, lorsque la tension de l'unité de stockage d'énergie électrique est inférieure au premier seuil. Ainsi, si la tension de l'unité de stockage est si faible que la tension au point de connexion entre la borne de recharge continue et le convertisseur continu/continu est inférieure à une tension minimale de fonctionnement, on assure quand même la charge de l'unité de stockage en maintenant fermés les interrupteurs du convertisseur de tension continu/continu. Notamment, les interrupteurs sont fermés jusqu'à ce que la tension de l'unité de stockage devienne supérieure ou égale au premier seuil.

Selon un mode de réalisation, le premier seuil S1 et/ou le deuxième seuil S2 sont donnés par les relations : $S1 = V_{Bmin} \times \alpha_V$, $S2 = V_{Bmax} \times \alpha_v$, où $V_{Bmax}$ est une tension maximale admissible par la borne de recharge continue et $V_{Bmin}$ est une tension minimale admissible par la borne de recharge continue.

L'invention concerne en outre un convertisseur de tension continu/continu, notamment configuré pour adapter la tension entre une unité électrique connectée en entrée, notamment une borne de recharge continue, et une unité électrique en sortie, notamment une unité de stockage d'énergie électrique, comprenant :

- au moins deux cellules entrelacées configurées pour fonctionner en décalage de phase, chaque cellule ayant des interrupteurs respectifs ;

- une unité de commande configurée pour commander par modulation de largeur d'impulsion lesdits interrupteurs avec un rapport cyclique pour adapter la tension entre l'unité électrique en entrée et l'unité électrique en sortie, avec un rapport cyclique ayant une valeur donnée sensiblement constante sur plusieurs cycles d'entrelacement, lorsque la tension de l'unité de stockage d'énergie électrique est supérieure à un premier seuil et/ou inférieure à un deuxième seuil, lesdits seuils étant fonction d'une gamme de fonctionnement de la borne de recharge continue. Notamment, l'unité de stockage d'énergie électrique est embarquée dans un véhicule.

Le convertisseur de tension continu/continu selon l'invention peut comprendre une unité de commande configurée pour mettre en oeuvre l'une quelconque des caractéristiques décrites précédemment en relation avec le procédé selon l'invention.

Selon un mode de réalisation, l'unité de commande comprend un comparateur configuré pour comparer la tension à un point de connexion avec la tension de l'unité électrique en sortie divisée par la valeur $\alpha_v$, de manière à asservir le rapport cyclique du convertisseur à la valeur $\alpha_v$ donnée.

L'invention va être plus précisément décrite en faisant référence aux figures, qui illustrent la description et ne constituent pas une limitation de la portée de l'invention, et dans lesquelles :

- la figure 1 présente un exemple de circuit dans lequel le procédé de charge selon l'invention est mis en œuvre;
- la figure 2 représente le courant en valeur normalisée en fonction du rapport cyclique dans un convertisseur continu-continu ayant 2, 3, 4 ou 5 cellules entrelacées ;
- la figure 3 illustre une variante du procédé selon l'invention ;
- la figure 4 illustre une autre variante du procédé selon l'invention.

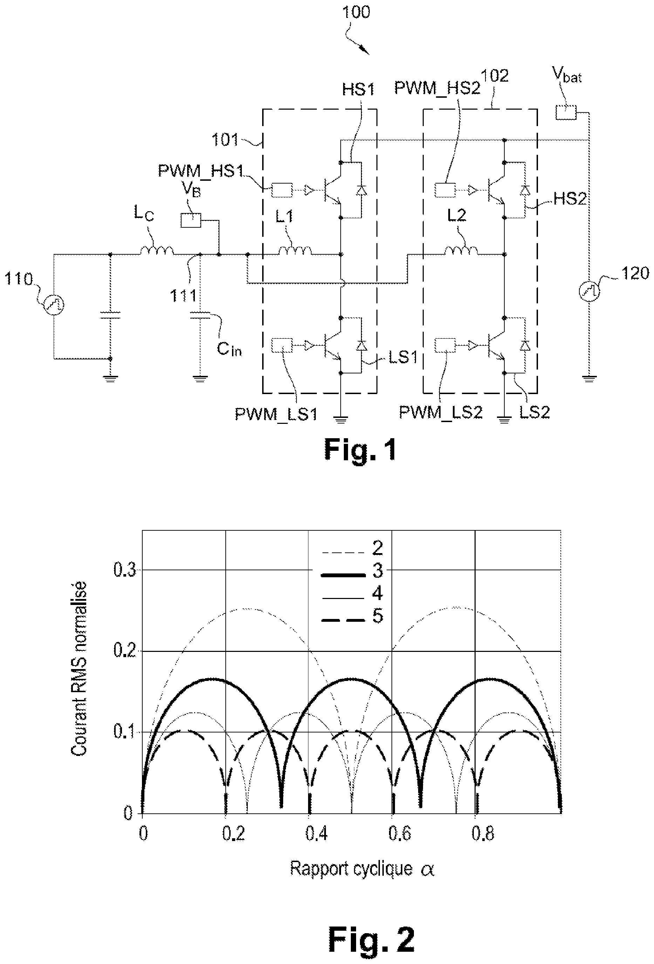

Le procédé selon l'invention va être mieux compris en faisant référence à la figure 1.

Un convertisseur de tension continu/continu 100 est utilisé pour adapter la tension entre une borne de recharge continue 110 et une batterie 120, car la batterie 120 présente une tension de charge complète supérieure à la gamme de fonctionnement de la borne de recharge. Notamment, la batterie 120 peut avoir une tension de charge complète de 800V, et la borne de recharge peut être conçue pour délivrer une tension comprise entre 250 et 500V, notamment à une puissance de 50kw, 100kW ou 150kw, voire plus. Dans l'exemple de la figure 1, la batterie 120 pourrait être un autre type d'unité de stockage d'énergie électrique. La batterie 120 est embarquée dans un véhicule pour alimenter un moteur électrique qui entraine le déplacement du véhicule.

Selon une variante, le convertisseur de tension continu/continu 100 comprend deux cellules 101, 102. Les cellules 101, 102 comprennent respectivement un bras qui comporte un interrupteur « côté haut » HS1, HS2 connecté à la borne positive de la batterie 120 et un interrupteur « côté bas » LS1, LS2 connecté à la masse de la batterie 120. Les deux interrupteurs sont connectés en série. Dans chaque cellule, une inductance L1, L2 a une extrémité connectée à la borne commune des interrupteurs côté haut et coté bas. L'exemple de la figure 1 pourrait avoir une autre configuration de cellules. Par exemple, chaque cellule pourrait avoir une configuration en pont complet. En particulier, le convertisseur 100 est de type élévateur pour augmenter la tension délivrée par la borne de recharge 110 pour alimenter la batterie 120.

Les interrupteurs du convertisseur de tension continu/continu 100 peuvent être des transistors, notamment des transistors à effet de champ. Les transistors peuvent être de type MOSFET (acronyme de "Metal Oxyde Semiconductor Field Effect Transistor" en anglais, c'est-à-dire "Transistor à Effet de Champ à Semi-conducteur à Oxyde Métallique").

Le convertisseur de tension continu/continu 100 comprend une unité de commande configurée pour commander les interrupteurs. Pendant la charge de la batterie 120 par la borne de recharge 110, les interrupteurs sont commandés par modulation de largeur d'impulsion avec un rapport cyclique $\alpha$ pour adapter la tension de la borne de recharge 110 à celle de la batterie 120. Les cellules fonctionnent en décalage de phase avec un entrelacement afin de limiter les ondulations de courant au point de connexion 111 entre le convertisseur continu/continu 100 et la borne de recharge 110. Pendant le procédé de charge, le rapport cyclique $\alpha$ a une valeur sensiblement constante $\alpha_v$. Notamment, le rapport cyclique $\alpha$ peut rester constant sur plusieurs cycles d'entrelacement consécutifs. Cela permet de toujours obtenir les mêmes ondulations de courant au point de connexion 111, ce qui simplifie l'élimination de ces ondulations par un filtre par exemple (non représenté). Les ondulations de courant interviennent à une fréquence qui est fonction du nombre de cellules du convertisseur et de la fréquence de découpage du convertisseur. Dans l'exemple illustré en figure 1, lorsque la fréquence de découpage est de 20kHz, la fréquence des ondulations est de 2x20kHz=40kHz. La fréquence de découpage peut être définie lors de la conception du convertisseur, elle est généralement comprise entre 5 et 200kHz.

La figure 2 décrit l'allure du courant RMS normalisé au point de connexion 111 en fonction du rapport cyclique $\alpha$ pour des convertisseurs de tension continu/continu ayant 2, 3, 4 ou 5 cellules. On observe qu'en choisissant correctement le rapport cyclique $\alpha$ des cellules du convertisseur, on peut fortement atténuer, voire totalement supprimer, les ondulations de courant au point de connexion 111.

Selon une variante de l'exemple illustré en figure 1, le rapport cyclique α reste sensiblement égal à une valeur $\frac{X}{N}$ où N est le nombre de cellules entrelacées du convertisseur 100 et X est un entier naturel, supérieur ou égal à 1 et inférieur à N. En particulier, en figure 1, le convertisseur continu/continu 100 comprend deux cellules 101, 102 entrelacées. Le rapport cyclique α est alors égal à 0,5. Pour des rapports cycliques α de valeurs $\frac{X}{N}$ les ondulations de courant produites par les interrupteurs HS1,HS2, LS1,LS2 sont très faibles, voire nulles. Notamment, les ondulations de courant peuvent avoir une valeur normalisée inférieure à 2,5%. Par exemple, pour un courant moyen de 125A au point de connexion 111, le courant crête, c'est-à-dire la différence entre la valeur maximale du courant et la valeur minimale, est comprise entre 2 et 3A.

En particulier, le rapport cyclique α peut-être égal à 0,5 pour un convertisseur de tension continu/continu ayant un nombre pair de cellule car la valeur de rapport cyclique 0,5 atténue les ondulations de courant pour ces convertisseurs. Ainsi, un même procédé de charge peut-être mis en oeuvre pour différents convertisseurs de tension continu/continu utilisés.

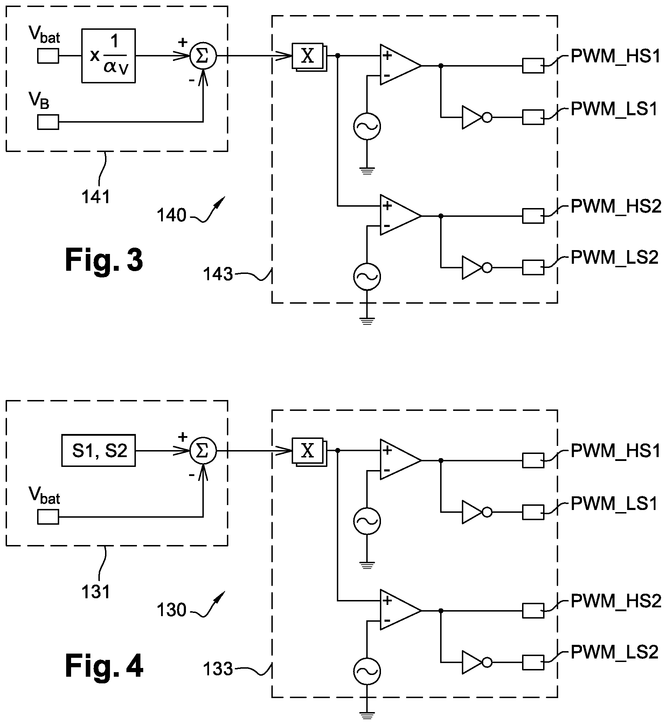

Selon une variante, le maintien du rapport cyclique α à la valeur $\alpha_V$ peut être réalisé en asservissant la tension $V_B$ au point de connexion 111 à la tension $V_{BAT}$ aux bornes de l'unité de stockage électrique 120 divisée par la valeur $\alpha_v$. A cet effet, le convertisseur de tension continu/continu 100 peut comprendre une unité 140 illustrée en figure 3. L'unité 140 comprend un comparateur 141 qui compare la tension $V_B$ au point de connexion 111 avec la tension $V_{BAT}$ de la batterie 120 divisée par la valeur $\alpha_v$. Une unité 143 détermine ensuite le rapport cyclique α en fonction du résultat de la comparaison et délivre les signaux de modulations PWM_HS1, PWM_LS1, PWM_HS2, PWM_LS2 aux interrupteurs HS1, HL1, HS2, HL2 du convertisseur 100. Ainsi, le rapport cyclique délivré aux interrupteurs HS1, HL1, HS2, HL2 sera égal à la valeur donnée $\alpha_v$.

La tension $V_{BAT}$ de la batterie 120 augmente progressivement pendant le procédé de charge pour atteindre un niveau de charge pleine prédéfini, par exemple 800V. La tension $V_B$ au point de connexion 111 augmente en corrélation avec la tension $V_{BAT}$ de la batterie 120. Par exemple, lorsque le rapport cyclique α est égal à 0,5, la tension $V_B$ au point de connexion 111 est égal à la moitié de la tension $V_{BAT}$ de la batterie 120. Lorsque la borne de recharge continue 110 est conçue pour délivrer une tension comprise dans une gamme donnée, par exemple entre 250 et 500V, une tension plus élevée au point de connexion 111 peut endommager la borne de recharge continue 110. Une tension trop élevée au point de connexion 111 peut apparaitre si la batterie 120 a une tension de pleine charge supérieure à $\alpha_v \times V_{Bmax}$, où $V_{Bmax}$ est la tension maximale admissible par la borne de recharge continue. De même, une tension inférieure à la tension minimale $V_{Bmin}$ admissible par la borne de recharge continue 110 peut apparaitre au point de connexion 111, si la batterie 120 a une tension de pleine charge inférieure à $\alpha_v \times V_{Bmin}$.

Pour pallier à ces situations, selon une variante, le rapport cyclique α reste constant à la valeur donnée $\alpha_v$, en particulier avec $\alpha_v = \frac{X}{N}$ comme décrit précédemment, lorsque la tension $V_{BAT}$ de la batterie 120 est supérieure à un premier seuil S1 et inférieure à un deuxième seuil S2. En particulier, le premier seuil S1 est égal à $\alpha_v \times V_{Bmin}$ et le deuxième seuil S2 est égal à $\alpha_v \times V_{Bmax}$. Mais d'autres valeurs de seuil S1, S2 peuvent être choisies. Par exemple, le premier seuil S1 peut être plus grand que $\alpha_v \times V_{Bmin}$ ou le deuxième seuil S2 peut être plus petit que $\alpha_v \times V_{Bmax}$ pour être sûr de ne jamais dépasser la gamme de fonctionnement de la borne de recharge continue 110. Dans l'exemple illustré en figure 1, une seule condition sur les seuils S1, S2 pourrait être utilisée, par exemple lorsque la tension de pleine charge de la batterie 120 est connue pour être suffisamment grande ou petite.

Dans un exemple particulier de cette variante, si la tension $V_{BAT}$ de la batterie 120 est inférieure au premier seuil S1, le rapport cyclique du convertisseur de tension continu/continu 100 est égal à 1. Ainsi, les interrupteurs HS1, HL1, HS2, HL2 du convertisseur 100 sont maintenus fermés. La batterie 120 voit une tension sensiblement égale à la tension au point de connexion 111. Si la tension $V_{BAT}$ de la batterie 120 dépasse le deuxième seuil S2, le rapport cyclique α ne reste plus constant. Le rapport cyclique α est modifié pour maintenir la tension $V_B$ au point de connexion 111 dans la gamme de fonctionnement de la borne de recharge 110. Dans ce cas, le rapport cyclique α peut être diminué pour réduire la tension $V_B$ au point de connexion 111, notamment pour un convertisseur continu/continu 100 de type élévateur. Dans cet exemple particulier, le convertisseur de tension continu/continu 100 peut comprendre une unité 130 illustrée en figure 4. L'unité 130 comprend un comparateur 131 qui compare la tension $V_{BAT}$ de la batterie 120 avec les seuils S1,S2 et une unité 133 qui détermine le rapport cyclique α en fonction du résultat de la comparaison et délivre les signaux de modulations PWM_HS1, PWM_LS1, PWM_HS2, PWM_LS2 aux interrupteurs HS1, HL1, HS2, HL2 du convertisseur 100.

Comme illustré en figure 1, le convertisseur de tension continu/continu 100 peut comprendre une capacité Cin qui permet d'être compatible avec une borne de recharge continue qui est une source de courant. En figure 1, l'inductance Lc correspond à l'inductance d'un câble qui relie le convertisseur 101. Un filtre électronique peut faire l'interface entre la borne de recharge continue 110 et le convertisseur de tension continu/continu 100. Le point de connexion 111 peut alors correspondre au point de connexion entre la borne de recharge continue 110 et le filtre électronique, ou au point de connexion entre le filtre électronique et le convertisseur de tension continu/continu 100.

L'invention ne se limite pas aux seuls exemples ou variantes décrits ci-dessus, notamment ceux-ci peuvent être combinés entre eux. En particulier, le convertisseur de tension continu/continu 100 peut être un dispositif combiné d'alimentation et de charge tel que décrit dans les demandes de brevet européen EP2367704 et EP2367705, et le procédé de charge selon l'invention peut comprendre des étapes décrites dans ces demandes de brevet. Ceci est en particulier le cas lorsque les inductances L1, L2 correspondent à des phases du moteur du véhicule.

## Revendications

1. Procédé de charge d'une unité de stockage d'énergie électrique (120), notamment embarquée dans un véhicule, à partir d'une borne de recharge continue (110) en utilisant un convertisseur de tension continu/continu (100) pour adapter la tension entre ladite borne de recharge continue (110) et ladite unité de stockage d'énergie électrique (120), ledit convertisseur de tension continu/continu (100) comprenant au moins deux cellules entrelacées (101, 102) fonctionnant en décalage de phase, chaque cellule (101, 102) ayant des interrupteurs (HS1, LS1, HS2, LS2) respectifs ;
   ledit procédé comportant une commande par modulation de largeur d'impulsion des interrupteurs (HS1, LS1, HS2, LS2) dudit convertisseur de tension continu/continu (100) avec un rapport cyclique ($\alpha$) pour adapter la tension entre ladite borne de recharge continue (110) et l'unité de stockage d'énergie électrique (120) **caractérisé en ce que**, ledit rapport cyclique ($\alpha$) a une valeur donnée $\alpha_V$ constante sur plusieurs cycles d'entrelacement consécutifs, lorsque la tension ($V_{BAT}$) de l'unité de stockage d'énergie électrique (120) est supérieure à un premier seuil (S1) et/ou inférieure à un deuxième seuil (S2), lesdits seuils étant fonction d'une gamme de fonctionnement de la borne de recharge continue.

2. Procédé selon la revendication 1, dans lequel la valeur donnée $\alpha_V$ du rapport cyclique ($\alpha$) est égale au produit de l'inverse du nombre (N) de cellules du convertisseur de tension continu/continu (100) par un entier naturel.

3. Procédé selon la revendication 1 ou 2, dans lequel ladite valeur donnée $\alpha_V$ du rapport cyclique est égale à 50% lorsque le convertisseur de tension continu/continu (100) comprend un nombre pair de cellules.

4. Procédé selon l'une des revendications précédentes, dans lequel le rapport cyclique ($\alpha$) du convertisseur de tension continu/continu (100) est modifié, lorsque la tension ($V_{BAT}$) de l'unité de stockage d'énergie électrique (120) est supérieure au deuxième seuil (S2).

5. Procédé selon l'une des revendications précédentes, dans lequel le rapport cyclique ($\alpha$) du convertisseur de tension continu/continu (100) est égal à 1, lorsque la tension ($V_{BAT}$) de l'unité de stockage d'énergie électrique (120) est inférieure au premier seuil (S1).

6. Procédé selon l'une des revendications précédentes, dans lequel le premier seuil S1 et/ou le deuxième seuil S2 sont donnés par les relations :

$$S1 = V_{\text{Bmin}} \times \propto_V, \; S2 = V_{\text{Bmax}} \times \propto_V,$$

où $V_{\text{Bmax}}$ est une tension maximale admissible par la borne de recharge continue (110) et $V_{\text{Bmin}}$ est une tension minimale admissible par la borne de recharge continue (110).

7. Convertisseur de tension continu/continu (100), configuré pour adapter la tension entre une unité électrique connectée en entrée, notamment une borne de recharge continue (110), et une unité électrique en sortie, notamment une unité de stockage d'énergie électrique (120), comprenant :

   - au moins deux cellules entrelacées (101, 102) configurées pour fonctionner en décalage de phase, chaque cellule (101, 102) ayant des interrupteurs (HS1, LS1, HS2, LS2) respectifs ; le convertisseur étant **caractérisé par**
   - une unité de commande configurée pour commander par modulation de largeur d'impulsion lesdits interrupteurs (HS1, LS1, HS2, LS2) avec un rapport cyclique ($\alpha$) pour adapter la tension entre l'unité électrique en entrée et l'unité électrique en sortie, avec un rapport cyclique ayant une valeur $\alpha_V$ donnée constante sur plusieurs cycles d'entrelacement consécutifs, lorsque la tension ($V_{BAT}$) de l'unité de stockage d'énergie électrique (120) est supérieure à un premier seuil (S1) et/ou inférieure à un deuxième seuil (S2), lesdits seuils étant fonction d'une gamme de fonctionnement de la borne de recharge continue.

8. Convertisseur de tension selon la revendication 7, dans lequel l'unité de commande comprend un comparateur (141) configuré pour comparer la tension ($V_B$) à un point de connexion (111) avec la tension ($V_{BAT}$) de l'unité électrique en sortie (120) divisée

par la valeur $\alpha_v$, de manière à asservir le rapport cyclique du convertisseur à la valeur $\alpha_v$ donnée.

**Patentansprüche**

1. Verfahren zum Laden einer Stromspeichereinheit (120), die insbesondere in ein Fahrzeug eingebaut ist, ab einer Gleichstrom-Ladestation (110) unter Verwendung eines Gleichspannungswandlers (100) zwecks Anpassung der Spannung zwischen der Gleichstrom-Ladestation (110) und der Stromspeichereinheit (120), wobei der Gleichspannungswandler (100) mindestens zwei verschaltete Zellen (101, 102) umfasst, die phasenverschoben arbeiten, wobei jede Zelle (101, 102) jeweilige Schalter (HS1, LSI, HS2, LS2) hat;
   wobei das Verfahren eine Steuerung durch Pulsweitenmodulation der Schalter (HS1, LSI, HS2, LS2) des Gleichspannungswandlers (100) mit einem zyklischen Verhältnis ($\alpha$) aufweist, um die Spannung zwischen der Gleichstrom-Ladestation (110) und der Stromspeichereinheit (120) anzupassen, **dadurch gekennzeichnet, dass** das zyklische Verhältnis ($\alpha$) einen gegebenen Wert $\alpha_v$ hat, der über mehrere aufeinanderfolgende Verschaltungszyklen konstant ist, wenn die Spannung ($V_{BAT}$) der Stromspeichereinheit (120) über einem ersten Grenzwert (S1) und/oder unter einem zweiten Grenzwert (S2) liegt, wobei die Grenzwerte von einem Betriebsbereich der Gleichstrom-Ladestation abhängen.

2. Verfahren nach Anspruch 1, wobei der gegebene Wert $\alpha_v$ des zyklischen Verhältnisses ($\alpha$) gleich dem Produkt der Inversen der Anzahl (N) von Zellen des Gleichspannungswandlers (100) mit einer Ganzzahl ist.

3. Verfahren nach Anspruch 1 oder 2, wobei der gegebene Wert $\alpha_v$ des zyklischen Verhältnisses gleich 50 % ist, wenn der Gleichspannungswandler (100) eine paarige Anzahl von Zellen umfasst.

4. Verfahren nach einem der vorangehenden Ansprüche, wobei das zyklische Verhältnis ($\alpha$) des Gleichspannungswandlers (100) verändert wird, wenn die Spannung ($V_{BAT}$) der Stromspeichereinheit (120) über dem zweiten Grenzwert (S2) liegt.

5. Verfahren nach einem der vorangehenden Ansprüche, wobei das zyklische Verhältnis ($\alpha$) des Gleichspannungswandlers (100) gleich 1 ist, wenn die Spannung ($V_{BAT}$) der Stromspeichereinheit (120) unter dem ersten Grenzwert (S1) liegt.

6. Verfahren nach einem der vorangehenden Ansprüche, wobei der erste Grenzwert S1 und/oder der zweite Grenzwert S2 durch die Relationen gegeben sind:

$$S1 = V_{Bmin} \times \alpha_v, \quad S2 = V_{Bmax} \times \alpha_v,$$

wobei $V_{Bmax}$ eine von der Gleichstrom-Ladestation (110) maximal zulässige Spannung ist und $V_{Bmin}$ eine von der Gleichstrom-Ladestation (110) minimal zulässige Spannung ist.

7. Gleichspannungswandler (100), der zur Anpassung der Spannung zwischen einer eingangs angeschlossenen elektrischen Einheit, insbesondere einer Gleichstrom-Ladestation (110), und einer ausgangs angeschlossenen elektrischen Einheit, insbesondere einer Stromspeichereinheit (120), konfiguriert ist, umfassend:

   - mindestens zwei verschaltete Zellen (101, 102), die konfiguriert sind, um phasenverschoben zu arbeiten, wobei jede Zelle (101, 102) jeweilige Schalter (HS1, LSI, HS2, LS2) hat; wobei der Spannungswandler **gekennzeichnet ist durch**
   - eine Steuereinheit, die konfiguriert ist, um durch Pulsweitenmodulation die Schalter (HS1, LS1, HS2, LS2) mit einem zyklischen Verhältnis ($\alpha$) zu steuern, um die Spannung zwischen der elektrischen Einheit eingangs und der elektrischen Einheit ausgangs mit einem zyklischen Verhältnis mit einem gegebenen Wert $\alpha_v$ anzupassen, der über mehrere aufeinanderfolgende Verschaltungszyklen konstant ist, wenn die Spannung ($V_{BAT}$) der Stromspeichereinheit (120) über einem ersten Grenzwert (S1) und/oder unter einem zweiten Grenzwert (S2) liegt, wobei die Grenzwerte von einem Betriebsbereich der Gleichstrom-Ladestation abhängen.

8. Spannungswandler nach Anspruch 7, wobei die Steuereinheit einen Vergleicher (141) umfasst, der konfiguriert ist, um die Spannung ($V_B$) an einem Anschlusspunkt (111) mit der Spannung ($V_{BAT}$) der elektrischen Einheit ausgangs (120), dividiert durch den Wert $a_v$, zu vergleichen, um das zyklische Verhältnis des Spannungswandlers gemäß dem gegebenen Wert $\alpha_v$ zu steuern.

**Claims**

1. Method for charging an electrical energy storage unit (120), especially onboard a vehicle, from a continuous charging station (110) by using a DC/DC voltage converter (100) to adapt the voltage between said continuous charging station (110) and said electrical energy storage unit (120), said DC/DC voltage converter (100) comprising at least two interleaved cells (101, 102) operating in phase shift, each cell (101, 102) having respective switches (HS1, LS1, HS2, LS2);

said method comprising controlling by pulse width modulation the switches (HS1, LS1, HS2, LS2) of said DC/DC voltage converter (100) with a duty factor ($\alpha$) to adapt the voltage between said continuous charging station (110) and the electrical energy storage unit (120), **characterised in that** said duty factor ($\alpha$) has a constant given value $\alpha_v$ on several consecutive interleaving cycles, when the voltage ($V_{BAT}$) of the electrical energy storage unit (120) is greater than a first threshold (S1) and/or lower than a second threshold (S2), said thresholds being a function of an operating range of the continuous charging station.

2. Method according to claim 1, wherein the given value $\alpha_v$ of the duty factor ($\alpha$) is equal to the product of the reciprocal of the number (N) of cells of the DC/DC voltage converter (100) by a natural integer.

3. The method according to claim 1 or 2, wherein said given value $\alpha_v$ of the duty factor is equal to 50% when the DC/DC voltage converter (100) comprises an even number of cells.

4. The method according to one of the previous claims, wherein the duty factor ($\alpha$) of the DC/DC voltage converter (100) is modified, when the voltage ($V_{BAT}$) of the electrical energy storage unit (120) is greater than the second threshold (S2).

5. The method according to one of the previous claims, wherein the duty factor ($\alpha$) of the DC/DC voltage converter (100) is equal to 1, when the voltage ($V_{BAT}$) of the electrical energy storage unit (120) is lower than the first threshold (S1).

6. The method according to one of the previous claims, wherein the first threshold (S1) and/or the second threshold (S2) are given by the relationships:

$$S1 = V_{Bmin} \times \alpha_V, \quad S2 = V_{Bmax} \times \alpha_V,$$

where $V_{Bmax}$ is an allowable maximum voltage by the continuous charging station (110) and $V_{Bmin}$ is an allowable minimum voltage by the continuous charging station (110).

7. A DC/DC voltage converter (100), configured to adapt the voltage between an electrical unit connected at the input, especially a continuous charging station (110), and an electrical unit at the output, especially an electrical energy storage unit (120), comprising:

- at least two interleaved cells (101, 102) configured to operate in phase shift, each cell (101, 102) having respective switches (HS1, LS1, HS2, LS2); said converter being **characterised by**
- a control unit configured to control by pulse width modulation said switches (HS1, LS1, HS2, LS2) with a duty factor ($\alpha$) to adapt the voltage between the electrical unit at the input and the electrical unit at the output, with a duty factor having a constant given value $\alpha_v$ on several consecutive interleaving cycles, when the voltage ($V_{BAT}$) of the electrical energy storage unit (120) is greater than a first threshold (S1) and/or lower than a second threshold (S2), said thresholds being a function of an operating range of the continuous charging station.

8. The voltage converter according to claim 7, wherein the control unit comprises a comparator (141) configured to compare the voltage ($V_B$) at a connecting point (111) with the voltage ($V_{BAT}$) of the electrical unit at the output (120) divided by the value $\alpha_v$, so as to slave the duty factor of the converter with the given value $\alpha_v$.

**Fig. 1**

**Fig. 2**

**Fig. 3**

**Fig. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009196072 A1
- EP 2367704 A
- EP 2367705 A